Europäisches Patentamt

**European Patent Office**

**Office européen des brevets**

(11) Veröffentlichungsnummer: **0 197 352**
**B1**

(12)

# EUROPÄISCHE PATENTSCHRIFT

(45) Veröffentlichungstag der Patentschrift:
**28.06.89**

(21) Anmeldenummer: **86103430.4**

(22) Anmeldetag: **14.03.86**

(51) Int. Cl.⁴: **H02J 3/36,** H02M 7/757,
H02H 7/26

(54) Verfahren und Vorrichtung zum Betrieb einer HGÜ-Kurzkupplung bei Netzfehlern.

(30) Priorität: **27.03.85 DE 3511163**

(43) Veröffentlichungstag der Anmeldung:
**15.10.86 Patentblatt 86/42**

(45) Bekanntmachung des Hinweises auf die Patenterteilung:
**28.06.89 Patentblatt 89/26**

(84) Benannte Vertragsstaaten:
**AT CH DE FR GB LI SE**

(56) Entgegenhaltungen:
**EP-A- 0 142 096**

**PROCEEDINGS OF THE IEE, Band 127, Nr. 1, Teil C, Januar 1980, Seiten 15-19, Stev., Herts., GB; J. ARRILAGA et al.: "Fault studies in a.c. systems interconnected by h.v.d.c. links"**
**PROCEEDINGS OF THE IEE, Band 131, Nr. 4, Teil C, Juli 1984, Seiten 129-139 Stev., Herts., GB; G. GALANOS et al.: "Combined control and protection system for improved performance of HVDC links in the presence of AC faults"**

(73) Patentinhaber: **Siemens Aktiengesellschaft Berlin und München, Wittelsbacherplatz 2, D-8000 München 2(DE)**

(72) Erfinder: **Bendl, Franz-Wolfgang, Behringstrasse 68, D-8501 Forth(DE)**
Erfinder: **Wild, Georg, Zedernstrasse 20, D-8521 Langensendelbach(DE)**
Erfinder: **Kaufhold, Wolfgang, Dipl.-Ing., Lannersberg 15, D-8520 Erlangen(DE)**

## Beschreibung

Die Erfindung betrifft ein Verfahren zum Betrieb einer Hochspannungsgleichstromübertragungs-Kurzkupplung bei einem Netzfehler in einer der beiden über je einen Stromrichter an die Gleichstromübertragungsstrecke angeschlossenen Wechselspannungsnetze.

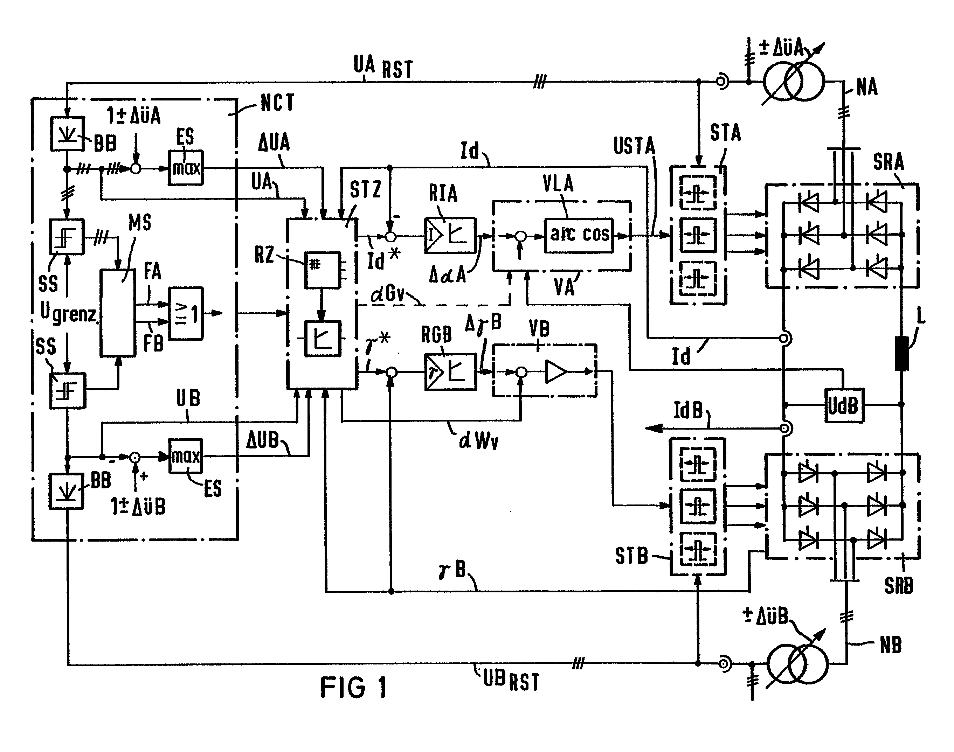

In Figur 1 ist der Aufbau einer derartigen HGÜ-Kurzkupplung dargestellt, bei der die beiden Netze NA und NB jeweils über einen Stromrichter SRA, SRB und die eigentliche Gleichstromübertragungsstrecke aneinandergekuppelt sind, wobei die HGÜ-Strecke im einfachsten Fall aus einer Drosselspule L besteht. Den Stromrichtern ist wechselstromseitig jeweils ein Stromrichtertransformator vorgeschaltet, dessen Übersetzungsverhältnis um gewisse Übersetzungsstufen ΔüA, ΔüB gegenüber einem Mittelwert verstellbar sind. Im konkreten Fall sind häufig jeweils mehrere Einzelstromrichter wechselstromseitig über Einzeltransformatoren an das Netz und gleichstromseitig in Reihe geschaltet, um einen höherpulsigen Betrieb der jeweiligen Stromrichteranordnung zu ermöglichen. Zur Verdeutlichung der Erfindung wird jedoch nur jeweils die Steuerung eines Stromrichters erläutert.

Die Ventile der Stromrichter erhalten jeweils von einem Steuersatz STA bzw. STB derartige Zündimpulse, daß bei der in Figur 1 schematisch dargestellten Struktur der Steueranordnung der Stromrichter SRA im Netz NA einen durch die Steuerspannung USTA steuerbaren Strom entnimmt (Gleichrichterbetrieb des Stromrichters SRA in der Station A), während der in der Station B angeordnete Stromrichter SRB als Wechselrichter arbeitet und in das Netz NB einspeist und über seine Steuerspannung USTB diese Einspeisung so steuert, daß an der HGÜ eine mittels eines Spannungsmeßgliedes meßbare Gleichspannung UdB aufrecht erhalten wird.

Zur Bildung der Steuerspannung USTA wird von einer zentralen Steuereinheit STZ ein Sollwert Id* für den mittels einer Meßeinrichtung gemessenen HGÜ-Gleichstrom Id bereitgestellt, wobei dessen Regeldifferenz von einem Stromregler RIA ausgeregelt wird. Das Ausgangssignal ΔαA des Stromreglers kann an sich direkt als Steuerspannung für den Steuersatz STA verwendet werden. Da jedoch über die Steuerspannung USTA primär nur die Ausgangsspannung des Stromrichters SRA eingeprägt wird und der in die HGÜ eingespeiste Gleichstrom entsprechend dem induktiven Spannungsabfall an dieser Spule von der Differenz der gleichstromseitigen Anschlußspannungen der Stromrichter SRA und SRB abhängt und daher die am gleichstromseitigen Anschluß des Stromrichtes SRB herrschende Gleichspannung UdB als Störgröße wirkt, ist es vorteilhaft, diese Gleichspannung UdB als Vorsteuerspannung dem Reglerausgangssignal ΔαA mittels einer Vorsteuereinrichtung VA in mitkoppelndem Sinn aufzuschalten, so daß über die Steuerspannung USTA letztlich der zum Stromsollwert Id* gehörende induktive Spannungsabfall eingeprägt wird und die Regelung des Stromes von einer Änderung von UdB unabhängig ist. Diese Art der Vorsteuerung ist in der nichtvorveröffentlichten europäischen Patentanmeldung Nr. 84 11 3024.8 (EP-A-146 726) beschrieben, wobei dort auch vorgesehen ist, den Meßwert UdB durch einen Modellwert zu ersetzen, der in der zentralen Steuereinrichtung STZ von einem Steuer- und Rechenglied RZ aus dem Stromistwert Id, den Amplituden UA und UB der Netze NA und NB, dem Steuerwinkel oder dem Löschwinkel γB der Station B und einem Parameter dx für den induktiven Spannungsabfall der Stromrichter berechnet werden kann.

Vorteilhaft enthält die Vorsteuereinrichtung VA ein Linearisierungsglied VLA, das berücksichtigt, daß zwischen dem durch die Steuerspannung vorgegebenen Zündwinkel αA des Stromrichters SRA und seiner im folgenden mit UdA bezeichneten gleichstromseitigen Anschlußspannung ungefähr die Beziehung $UdA = UA \cdot \cos \alpha A$ herrscht. Wird daher von der Vorsteuereinrichtung VA der Zündwinkel αA direkt als Steuerspannung gemäß $\alpha A = USTA = \arccos(\Delta\alpha A + UdB)/UA$ vorgegeben, so wird dadurch die Gleichspannung $UdA = \Delta\alpha A + UdB$ erzeugt. Das Reglerausgangssignal ΔαA bestimmt daher die Spannungsdifferenz UdA - UdB und gestattet somit, das Spannungsgefälle an der HGÜ so vorzugeben, wie es die Einprägung des gewünschten Stromes erfordert.

Die Linearisierung kann anstelle eines arc cos-Gebers für die Summe ΔαA + UdB auch auf andere Weise erfolgen. So kann z.B. die Spannung UdB in einen Gleichrichtervorsteuerwinkel $\alpha Gv = \arccos(UdB/UA)$ umgerechnet werden, der dann durch das Reglerausgangssignal ΔαA entsprechend einer Zündwinkelverschiebung $\alpha A = \alpha GV + \Delta\alpha A$ korrigiert wird. Im folgenden ist die der Vorsteuereinrichtung VA zugeführte Vorsteuergröße auch dann als Gleichrichtervorsteuerwinkel αGv bezeichnet, wenn sie (wie z.B. die Spannung UdB in Figur 1) noch nicht die Dimension eines Winkels hat, sondern erst innerhalb der Vorsteuereinrichtung so zu dem Reglerausgangssignal ΔαA verknüpft wird, daß der Steuerwinkel αA sich als Summe des durch die Vorsteuergröße gegebenen Vorsteuerwinkels und einer durch das Reglerausgangssignal gegebenen Winkelkorrektur darstellt.

Auch für den als Wechselrichter betriebenen Stromrichter SRB gilt, daß seine Gleichspannung UdB über die Amplitude UB des Netzes NB gemäß der Beziehung $UdB = UB \cdot \cos \alpha B$ vom Wechselrichtersteuerwinkel αB abhängt. Das zentrale Steuer- und Rechenglied RZ der Steuereinheit STZ gestattet also, durch Vorgabe des Wechselrichtersteuerwinkels die HGÜ-Spannung zu regeln.

Bei der Vorgabe des Wechselrichtersteuerwinkels ist jedoch zu beachten, daß im Zündzyklus der Stromrichterventile bei der Zündung eines neuen Ventiles der Strom erst vollständig von dem zu löschenden Ventil abkommutiert sein und dieses zu löschende Ventil seine vollständige Sperrfähigkeit erreicht haben muß, bevor seine Ventilspannung positiv wird ("Wechselrichtertrittgrenze"). Die Phasenlage, bei der diese Stromkommutierung abgeschlossen ist, wird als Löschwinkel γ bezeichnet, und es ist daher vorteilhaft, für die Steuerung des Stromrichter SRB nicht den Zündwinkel, sondern den Löschwinkel vorzugeben, der vor dem Steuer - und Rechenglied RZ aus vorgegebenen Nennwerten für die HGÜ-Leistungsübertragung errechnet werden kann.

Zwischen dem Löschwinkel und dem durch die Steuerspannung USTB vorzugebenden Wechselrichter-Zündwinkel liegt eine Phasenverschiebung, die als "Überlappungswinkel" u bezeichnet wird und vom Steuer- und Rechenglied RZ für jeden Soll-Löschwinkel $\gamma^*$ entsprechend den Momentanwerten des HGÜ-Stromes Id und der Netzamplitude UB zumindest ungefähr vorausberechnet werden kann. Wird daher dieser vorausberechnete Überlappungswinkel u zusammen mit dem Ausgangssignal $\Delta\alpha$B eines $\gamma$-Reglers RGB in einer Vorsteuereinrichtung VB zur Steuerspannung USTB umgesetzt, so ist es möglich, über einen Wechselrichtersteuerwinkel $\alpha$B den Stromrichter SRB auf die gewünschte Gleichspannung zu steuern. Die den Überlappungswinkel u bestimmende Vorsteuergröße für diese Vorsteuereinrichtung VB wird im folgenden mit $\gamma$Wv bezeichnet, wobei ein gesondertes Linearisierungsglied teilweise überflüssig wird und in Figur 1 durch einen Verstärker zur Pegelanpassung ersetzt werden kann. Jedoch gilt auch hier, daß der Aufbau der Vorsteuereinrichtung weitgehend den jeweiligen Anwendungsfällen angepaßt werden kann.

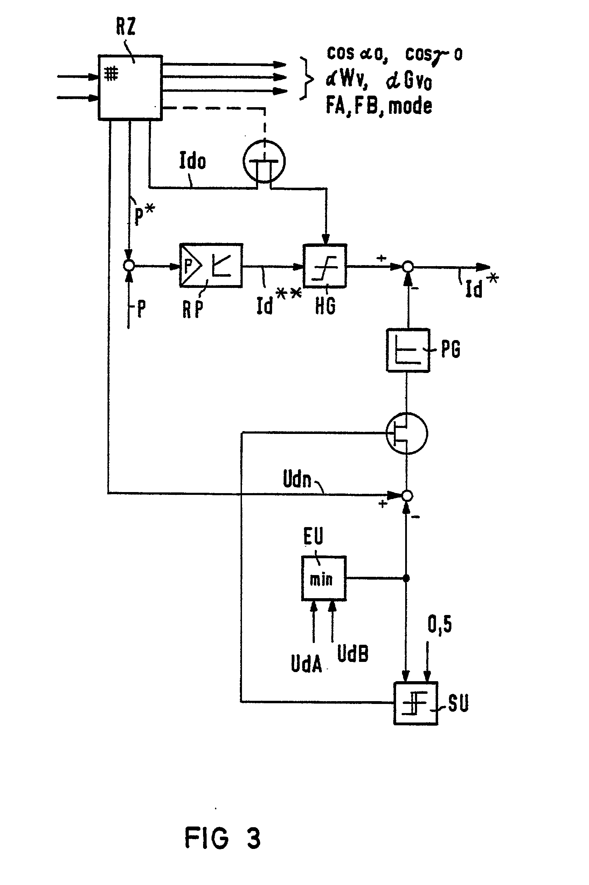

Damit die zentrale Steuereinheit STZ die Sollwerte Id*, $\gamma^*$ und die Vorsteuersignale $\alpha$Wv und gegebenenfalls $\alpha$Gv bilden kann, wird eine Information über die Amplituden UA, UB der Netze NA, NB und deren ungestörten Zustand benötigt, die an einer Netzspannungs-Kontrolleinrichtung NCT ("Netzwächter") abgegriffen wird, deren weitere in Figur 3 gezeigte Funktion noch im einzelnen besprochen wird.

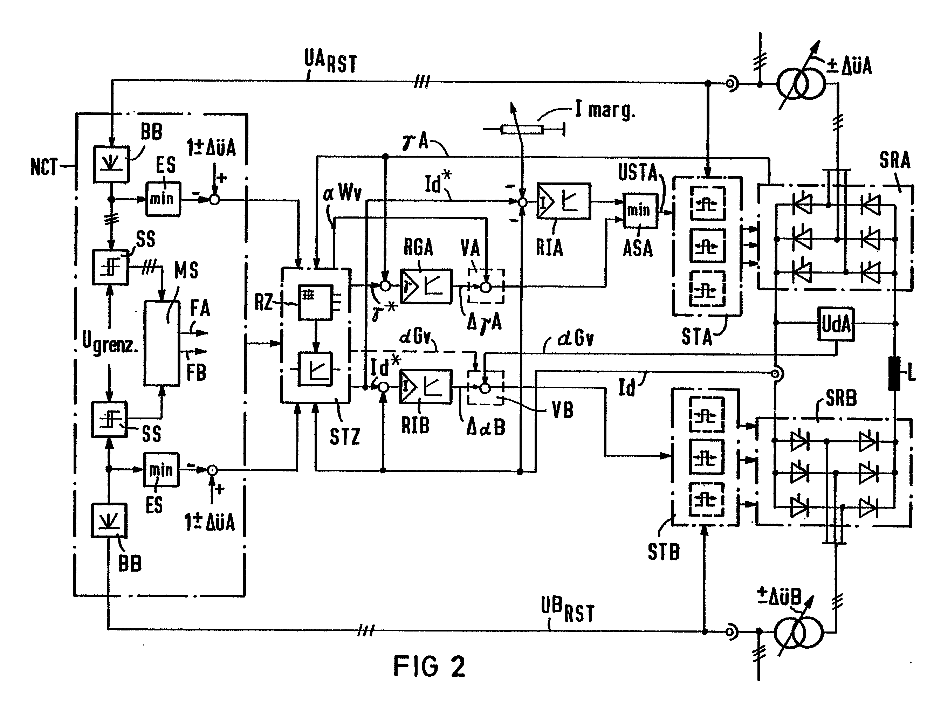

In Figur 2 ist die gleiche HGÜ mit ihren Stromrichtern SRA, SRB, deren Transformatoren und Steuersätzen STA, STB dargestellt, wobei jedoch jetzt der Stromrichter SRA der Station A als Wechselrichter und der Stromrichter SRB der Station B als Gleichrichter verwendet wird.

Man erkennt, daß der Steuersatz STB des als Gleichrichter arbeitenden Stromrichters SRB jetzt von einem Stromregler RIB gesteuert und mit einem Vorsteuersignal $\alpha$Gv vorgesteuert wird, das entweder an der Ausgangsgleichspannung UdA des Gleichrichters SRA abgegriffen oder als Modellwert von dem Rechenglied RZ der zentralen Steuereinrichtung STZ bereitgestellt wird.

Die Steuerspannung USTA für den Steuersatz STA des als Wechselrichter betriebenen Stromrichters SRA wird von einem nunmehr der Station A zugeordneten Löschwinkel-Regler RGA gebildet und mit der Wechselrichter-Vorsteuergröße $\alpha$Wv vorgesteuert. Die Wechselrichterstation ist um eine Marginalstromregelung ergänzt, die in Figur 1 für die Wechselrichterstation B der Übersichtlichkeit halber weggelassen und auch nicht für alle HGÜ-Anlagen vorgeschrieben ist. Es kann nämlich ein Betriebzustand auftreten, bei dem durch die Regelung der Stromeinspeisung in der Gleichrichterstation die Aufrechterhaltung des gewünschten Gleichstroms nicht erreicht wird und daher die HGÜ hinsichtlich ihrer Leistungsübertragung nicht voll ausgenutzt wird.

In diesen Fällen kann es vorteilhaft sein, in der Wechselrichterstation auf die Regelung der HGÜ-Gleichspannung über den Löschwinkel zu verzichten und vielmehr die Steuerspannung USTA so vorzugeben, daß durch eine Verschiebung des Wechselrichter-Zündwinkels der in das Netz NA eingespeiste Strom so verändert wird, daß wenigstens ein um einen geringen Bruchteil ("Marginalstrom" Imarg) verringerter Gleichstromsollwert aufrechterhalten wird. Zu diesem Zweck ist auch in der Wechselrichterstation A ein Stromregler RIA vorhanden, dem als Sollwert der um den Marginalstrom Imarg verringerte Wert des dem Stromregler RIB zugeführten Stromsollwertes Id* als Sollwert zugeführt ist. Der Ausgang dieses zusätzlichen Stromreglers RIA und das Ausgangssignal der Vorsteuereinrichtung VA sind einer Auswahlschaltung ASA der Station A eingegeben.

Solange der Gleichstrom Id unter dem verringerten Sollwert Id* - Imarg liegt, ist das Ausgangssignal des Stromreglers RIA im Eingriff und auf die Steuerleitung für USTA durchgeschaltet, um den Gleichstrom Id durch Veränderung des Steuerwinkels zu erhöhen. Kehrt der Stromregler RIA aber sein Vorzeichen um oder wird der vom Löschwinkelregler RGA und dessen Vorsteuereinrichtung VA vorgegebene Zündwinkel erreicht, so schaltet die Auswahlschaltung ASA das Ausgangssignal dieser Löschwinkelregelung auf die Steuerleitung USTA durch, der Stromregler RIA kommt somit außer Eingriff und läuft, da seine Regelstrecke nunmehr unterbrochen ist, an den Anschlag. Die Auswahlschaltung ASA sorgt also für die Ablösung zwischen den Reglern RIA und RGA, um in der HGÜ zumindest des Strom Id* - Imarg aufrecht zu erhalten.

Die bisher anhand der Figuren 1 und 2 erläuterte Betriebsweise der HGÜ erfordert jedoch in beiden Stationen jeweils ein Drehspannungssystem, dessen Phasenspannungen jeweils ungefähr einen für den ungestörten Netzzustand vorgegebenen Nennwert aufweisen oder doch zumindest symmetrisch sind. Ein Einbruch oder Zusammenbruch einer oder zweier Phasenspannungen führt jedoch zu einem unsymmetrischen Spannungssystem. Während beim Ausfall einer Phase die beiden anderen Phasen eines Drehstromnetzes noch 66% der Ausgangleistung übertragen können, ergibt sich für die Gleichstromübertragung in der HGÜ ein wesentlich geringerer Wert.

Am Gleichspannungsausgang des vom Fehler betroffenen - "gestörten" - Stromrichters entsteht nämlich nunmehr eine wesentlich geringere mittlere Gleichspannung. Außerdem erzeugt das im gestörten Netz nunmehr vorhandene Gegensystem transiente Steuerwinkeländerungen, durch die auch der Gleichstrom verringert wird. Daher ist ohne Änderungen in der Steuerung nur noch eine gegenüber der möglichen Leistungsübertragung des gestörten Netzes wesentlich geringere Leistungsübertragung der HGÜ möglich. Bei einem gleichrichterseitigen Netzfehler kann der fehlerbedingte Einbruch der HGÜ-Gleichspannung sogar eine so starke Gleichstromänderung hervorrufen, daß es zum Abbruch des Stromflusses in der HGÜ kommt.

Eine derartige plötzliche Änderung der Leistungsübertragung stört aber auch die Stabilität der Spannung im ungestörten Netz. Es ist daher anzustreben, zumindest bei einpoligen Fehlern, die den größten statistischen Anteil an Netzfehlern haben, aber möglichst auch bei zweipoligen Fehlern die Energieübertragung für die Kurzkupplung nicht zu unterbrechen, sondern sogar einen möglichst großen Energietransport aufrecht zu erhalten.

Diese Aufgabe wird gelöst durch ein Verfahren mit den Merkmalen des Anspruchs 1.

Dabei wird zunächst an den Phasen des durch den Netzfehler gestörten Netzes (vorteilhaft an jeder Phase des gestörten Netzes) die Abweichung der Spannungsamplitude von einem vorgegebenen Nennwert oder allgemeiner die fehlerbedingte Änderung der Spannungsamplitude erfaßt und zu einer ersten Vorsteuergröße umgesetzt. Diese erste Vorsteuergröße wird so vorgegeben, daß der Gleichstrom, der normalerweise vom Stromregler der Gleichrichterstation bzw. vom Marginalstromregler der Wechselrichterstation bestimmt wird, auf einem hohen, z.B. dem Nennstrom oder dem vorgegebenen Stromsollwert Id*, gehalten werden kann. Diese erste Vorsteuergröße wird der Steuerspannung des an das fehlerhafte Netz angeschlossenen, "gestörten" Stromrichters so aufgeschaltet, daß dadurch die HGÜ-Gleichspannung verringert wird. Gleichzeitig wird durch Ausregeln der Spannungsdifferenz an den Gleichspannungsanschlüssen der Stromrichter eine zweite Vorsteuerspannung gewonnen, die als Vorsteuergröße für den Steuerwinkel des anderen - "ungestörten" - Stromrichters verwendet wird. Dies kann z.B. dadurch geschehen, daß die Gleichspannung des gestörten Stromrichters unter Berücksichtigung des gleichstromproportionalen Spannungsfalls der Anlage als Sollwert und als Istwert die Ausgangsgleichspannung des ungestörten Gleichrichters einem Korrektur-Spannungsregler aufgeschaltet wird, der die zweite Vorsteuergröße bildet.

Anhand der Figuren 1 bis 7 wird die Erfindung näher erläutert. Dabei zeigen:

Figur 1 die bereits beschriebene Struktur der HGÜ und eines Netzwächters für den Fall ungestörter Netze bei einer Betriebsart, bei der die Station A als Gleichrichter und die Station B als Wechselrichter betrieben wird,

Figur 2 bereits beschriebene Struktur der HGÜ mit Wechselrichterbetrieb in Station B und Gleichrichterbetrieb in STation A,

Figur 3 eine detailliertere Struktur der zentralen Steuereinheit STZ der Figuren 1 und 2,

Figur 4 die Teile einer bevorzugten Vorrichtung zur Durchführung des Verfahrens, die bei einer Störung des Betriebes nach Figur 1 benötigt werden,

Figur 5 eine Vorrichtung zur Erfassung des Gradienten,

Figur 6 diejenigen Teile einer bevorzugten Vorrichtung zur Durchführung des Verfahrens, die bei einer Störung des Betriebs nach Figur 2 benötigt werden.

Figur 7 eine Zusammenfassung der in den Figuren 4 und 6 gezeigten Teile.

Um das Auftreten eines Netzfehlers zu erfassen, werden für jede Station mittels eines Betragsbilderns BB (Fig. 1) die Amplituden (oder Mittels eines entsprechenden Meßgliedes die Effektivwerte) der einzelnen Phasenspannungen erfaßt, um in einer Schwellwertstufe SS auf Unterschreitung eines Grenzwertes $U_{grenz}$ überprüft zu werden. Bei Absinken einer oder mehrerer Spannungsamplituden wird ein Störungsgedächtnis MS gesetzt, das für die Dauer der Störung ein entsprechendes Fehlersignal FA bzw. FB abgibt, das den Netzfehler der jeweils gestörten Station meldet. Mit FA = 1 wird im fölgenden der gestörte Zustand des Stromrichters SRA und mit FB = 1 der gestörte Zustand des Stromrichters SRB bezeichnet.

Der in Figur 1 gezeigte Netzwächter NCT bildet unter Berücksichtigung des an den Stromrichtertransformatoren eingestellten Übersetzungsverhältnisses ΔüA die Abweichung der jeweiligen wechselstromseitigen Phaseneingangsspannung von dem vorgegebenen Wert, der für den ungestörten Nennzustand der Netze gilt und mit 1 ± ΔüA bezeichnet ist. Die Phasenspannung mit der geringsten Spannungsamplitude, d.h. dem größten Spannungseinbruch, wird von einer Extremalwert-Auswahlschaltung ES (im Fall von Figur 1 einer Maximalauswahl) ausgewählt und bestimmt den zu berücksichtigenden Wert ΔUA bzw. ΔUB der durch den Netzfehler hervorgerufenen Spannungsänderung. Beim in Figur 2 dargestellten Spannungswächter NCT wird aus den Amplituden der Phasenspannungen zuerst mittels einer Minimalauswahl die geringste Spannungsänderung ausgewählt und durch Vergleich mit der um das Übersetzungsverhältnis korrigierten Nennspannung die Änderung der Spannungsamplitude gebildet.

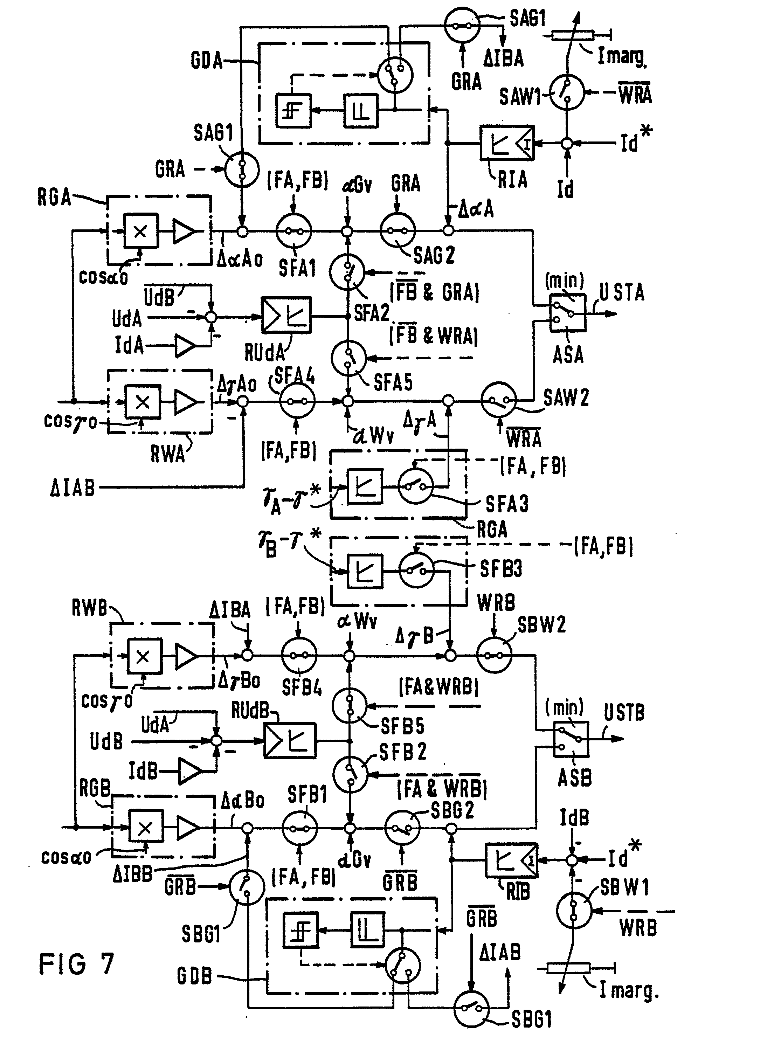

In der in Figur 3 gezeigten zentralen Steuereinheit STZ ist zunächst durch entsprechende Bedienungsbefehle der gewünschte Betriebszustand eingestellt, z.B. der in Figur 1 gezeigte Betriebszustand mit Wechselrichterbetrieb in der Station B und Gleichrichterbetrieb in der Station A, entsprechend einem Zustandssignal "mode" = 1. Dem Betrieb nach Figur 2 entspricht dann "mode" = 0. Dies ist für den in Figur 7 beschriebenen Fall vorgesehen, bei dem beide Stationen sowohl einen Gleichrichter-, wie auch einen Wechselrichterbetrieb ermöglichen.

In der zentralen Steuereinheit STZ kann ferner ein für den Betriebszustand vorgegebener Sollwert P* für die zu übertragende Leistung abgerufen werden, der zusammen mit einem auf geeignete (nicht dargestellte) Weise gebildeten Istwert P einem Führungsgrößenregler RP zugeführt wird, um daraus einen vorläufigen Sollwert Id** zu bilden. Es können auch andere Führungsgrößen zur Bildung des Strom-Sollwertes vorgesehen sein, die zu einer anderen Struktur der Führungsgrößenregelung führen.

Dieser vorläufige Gleichstromsollwert Id** ist gemäß Figur 3 einem Hochlaufgeber HG zugeführt, der z.B. dazu dient, nach einer vollkommenen Stillegung der HGÜ beim Wiederanlauf den Stromsollwert entsprechend einer vorgegebenen Rampenfunktion hochlaufen zu lassen, wie dies in der erwähnten europäischen Patentanmeldung 84 11 3024.8 (EP-A-146 726) beschrieben ist.

Dieser Hochlaufgeber kann insbesondere auch dazu benutzt werden, um während eines Netzfehlers, der durch ein Signal FA = 1 und/oder FB = 1 gegeben ist und dazu führt, daß der Leistungsregler wegen des einbrechenden Leistungsistwertes an den Anschlag geht, den Stromsollwert auf einen für diesen Fall vorgegebenen Wert IdO zu begrenzen, damit über die Stromrichter kein höherer Strom fließt, als dies die Thyristoren zulassen. In Figur 3 ist diese Strombegrenzung dadurch erreicht, daß dem Hochlaufgeber HG der in dem Rechenglied RZ abgespeicherte Wert IdO über einen entsprechenden, während des Fehlers angesteuerten Schalter als Grenzwert des Hochlaufgebers aufgeschaltet ist. Dies führt dazu, daß letztlich der im Anschlag liegende Leistungsregler RP außer Eingriff ist und anstelle des vorläufigen Stromsollwertes Id** nur der abgespeicherte Wert IdO vorgegeben wird.

Sinkt die HGÜ-Spannung, z.B. der mittels einer Minimalauswahl EU ausgewählte minimale Wert der HGÜ-Spannung am Ausgang der beiden Stromrichter, unter einen vorgegebenen Wert von z.B. das 0,5fache der Nenn-Gleichspannung, so kann es vorteilhaft sein, diesen Grenzwert der HGÜ-Gleichspannung auf Kosten eines absinkenden HGÜ-Gleichstroms zu halten. Zu diesem Zweck ist in Figur 3 mittels eines Schwellwertgliedes SU das Erreichen dieses Schwellwertes erfaßt. Mit dem Ausgangssignal dieser Schwellwertschaltung wird die Differenz zwischen einem im Rechenglied RZ abgespeicherten Spannungsnennwert Udn und dem von der Minimalauswahl EU durchgeschalteten HGÜ-Gleichspannungsistwert über einen Halbleiterschalter auf ein Proportionalglied PG gegeben, das nunmehr den vom Hochlaufgeber vorgegebenen, begrenzten Stromsollwert solange erniedrigt, bis sich in der HGÜ der vorgegebene Grenzwert der Spannung aufbaut. Der auf diese Weise gebildete endgültige Stromsollwert Id* wird dann dem jeweils in Eingriff stehenden Stromregler RIA bzw. RIB in den beiden Stationen als Sollwert zugeführt.

Das Steuer- und Rechenglied RZ hat neben der Speicherung der zum jeweils vorgegebenen Betriebszustand gehörenden Werte P*, "mode", IdO und Udn auch die Aufgabe, die zum jeweiligen Betriebszustand gehörende Vorsteuergröße $\alpha$Wv und $\alpha$Gv zu bilden, wie dies in der erwähnten europäischen Patentanmeldung beschrieben ist. Sie stellt darüber hinaus auch einen Gleichrichterzündwinkel-Steuerwert $\alpha$O bzw. cos $\alpha$O und einen Wechselrichterlöschwinkel-Steuerwert $\gamma$O bzw. cos $\gamma$O zur Verfügung, die im Fehlerfall dazu dienen, die in Figur 1 gezeigten Ausgangssignale $\Delta\alpha$A und $\Delta\gamma$v zu korrigieren bzw. zu ersetzen.

Zunächst sei nun das Auftreten eines Fehlers in dem Netz betrachtet, das an die Gleichrichterstation angeschlossen ist, im Fall der Figur 1 also ein Fehler im Netz NA (d.h. FA = 1).

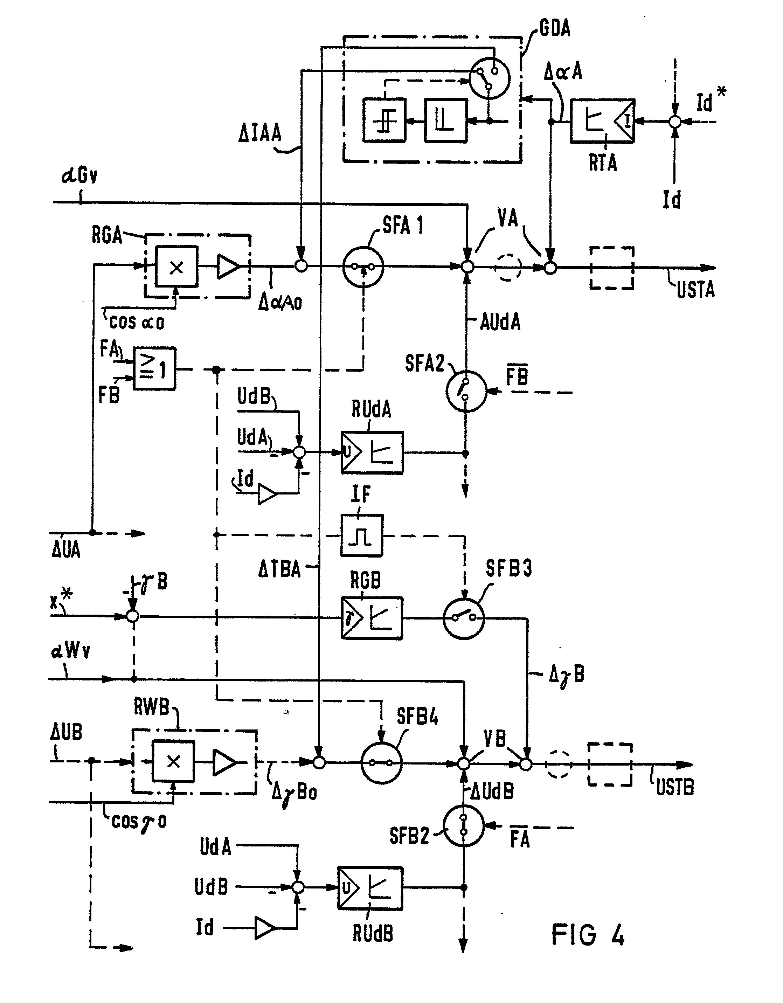

Gemäß Figur 4 wird aus der fehlerbedingten Abweichung $\Delta$UA der Wechselspannungsamplitude in einer der Gleichrichterstation A zugeordneten Rechenstufe RGA entsprechend der bereits erwähnten Beziehung UdA = UA . cos $\alpha$ durch Multiplikation der Spannungsabweichung $\Delta$UA mit der vorgegebenen Gleichrichterzündwinkel-Steuergröße cos $\alpha$O und geeignete Verstärkung in einer nachgeordneten Verstärkungseinrichtung eine Gleichrichtervorsteuergröße $\Delta\alpha$AO gebildet. Ein Schalter SFA1, der, wie auch die in Figur 3 angedeuteten Schalter und alle weiteren verwendeten Schalter vorteilhaft als Transistorschalter ausgebildet ist, wird mit einem Fehlersignal (FA, FB), das z.B. über ein ODER-Gatter aus den den jeweiligen Netzen zugeordneten Einzelfehlersignalen FA und FB gebildet wird, geschlossen und schaltet nunmehr $\Delta\alpha$AO der Steuerspannung USTA auf, die analog zu Figur 1 im ungestörten Betrieb aus der Vorsteuergröße $\alpha$Gv und dem Ausgangssignal $\Delta\alpha$A des Stromreglers RIA gebildet ist.

Während im Normalbetrieb (SFA1 geöffnet) das Reglersignal $\Delta\alpha$A den Vorsteuerwinkel $\alpha$Gv (Vorsteuergröße) nur geringfügig korrigiert und der Steuerwinkel $\alpha$A des Gleichrichters ungefähr gleich dem Vorsteuerwinkel $\alpha$Gv ist, wird beim Auftreten des Fehlers (SFA1 geschlossen) also durch $\Delta\alpha$AO der Gleichrichtersteuerwinkel so verschoben, daß die Anschlußgleichspannung des Gleichrichters proportional zu $\Delta$UA (entsprechend der Bildung von $\Delta$UA also proportional zur maximalen Abweichung der Spannungsamplituden der Phasenspannungen vom Nennwert, wie beim Netzwächter NCT der Figuren 1 oder 2 erläutert ist) verringert wird.

Eine andere Vorsteuergröße $\Delta$UdA, die von einem Spannungskorrekturregler RUdA gewonnen wird, ist von einem weiteren Schalter SFA2 abgeschaltet, der nur beim Auftreten eines Netzfehlers im Netz NB, d.h. bei FB = 1 geöffnet und durch das inverse Fehlersignal F̄B = 0 in der gezeigten offenen Stellung gehalten ist.

Auch in der Wechselrichterstation B ist ein derartiger Spannungskorrekturregler RUdB vorhanden, dessen Ausgangssignal nun über einen entsprechenden, vom Zählersignal FA = 1 geschlossenen Schalter SFB2 als zweite Vorsteuergröße $\Delta$UdB der Vorsteuereinrichtung VB der Station B aufgeschaltet wird. Diesem Korrekturregler ist als Sollwert der Istwert der Anschlußgleichspannung UdA der Station A aufgeschaltet, der bevorzugt um den zum Gleichstrom Id proportionalen Spannungsfall verringert ist. Als Istwert dient der Istwert der Anschlußgleichspannung UdB des Wechselrichters. Der Spannungskorrekturregler RUdB regelt somit über die auf den Wechselrichter wirkende zweite Vorsteuergröße $\Delta$UdB auch die Anschlußgleichspannung des Wechselrichters so, daß die durch die erste Vorsteuergröße $\Delta\alpha$AO im Gleichrichter bewirkte Rücksetzung der HGÜ-Spannung auch im Wechselrichterbetrieb in der richtigen Weise berücksichtigt wird.

Vorteilhaft wird beim Auftreten des Fehlersignals (FA, FB) über einen Impulsformer IF ein Schalter SFB3 geöffnet, durch den der Löschwinkelregler RGB des Wechselrichters blockiert wird. Das Ausgangssignal $\Delta\gamma B$, das in Normalbetrieb nur eine geringfügige Korrektur der Wechselrichtervorsteuergröße $\alpha Wv$ darstellt, ist also weggeschaltet. Es wird ersetzt durch ein entsprechendes Signal $\Delta\gamma BO$, das von einer Rechenstufe RWB entsprechend der ebenfalls bereits erwähnten Beziehung $UdB = UB \cdot \cos\gamma$ aus der fehlerbedingten Abweichung $\Delta UB$ der Spannungsamplitude und dem vorgegebenen Wechselrichterlöschwinkel-Steuersignal $\cos \gamma O$ durch Multiplikation und geeignete Verstärkung gebildet wird. Der Impulsformer IF enthält dabei vorteilhaft ein Zeitflied, das den Löschwinkelregler RGB nach Fehlerende erst zeitverzögert wieder einschaltet.

In Fig. 4 ist ferner eine Gradientenerfassung GDA dargestellt, die der Bildung von zwei Korrekturgrößen $\Delta IAA$, $\Delta IBA$ dient. Die geringfügige Zündwinkelkorrektur durch das Ausgangssignal $\Delta\alpha A$ des Stromreglers RIA kann nämlich auch während des Netzfehlers eingeschaltet bleiben. Das Ausgangssignal $\Delta\alpha A$ des Stromreglers RIA gibt dann an, ob zur Aufrechterhaltung des Stromsollwertes $Id^*$ im Fehlerfall eine positive oder eine negative Änderung des Istwertes $Id$ erforderlich ist. Ist der Gradient des Signals $\Delta\alpha A$ positive, weil der Stromregler mehr Strom verlangt, so kann eine aus $\Delta\alpha A$ abgeleitete Korrekturgröße zur Korrektur des Steuerwinkels der Gegenstation auf einen Eingang der Vorsteuereinrichtung VB aufgeschaltet werden. Will der Stromregler dagegen den Gleichstrom verringern und ist der Gradient $d (\Delta\alpha A)/dt$ negativ, so kann ein entsprechendes Signal als Korrekturwert für den Zündwinkel der eigenen Gleichrichterstation einem Eingang der Vorsteuereinrichtung VA aufgeschaltet werden.

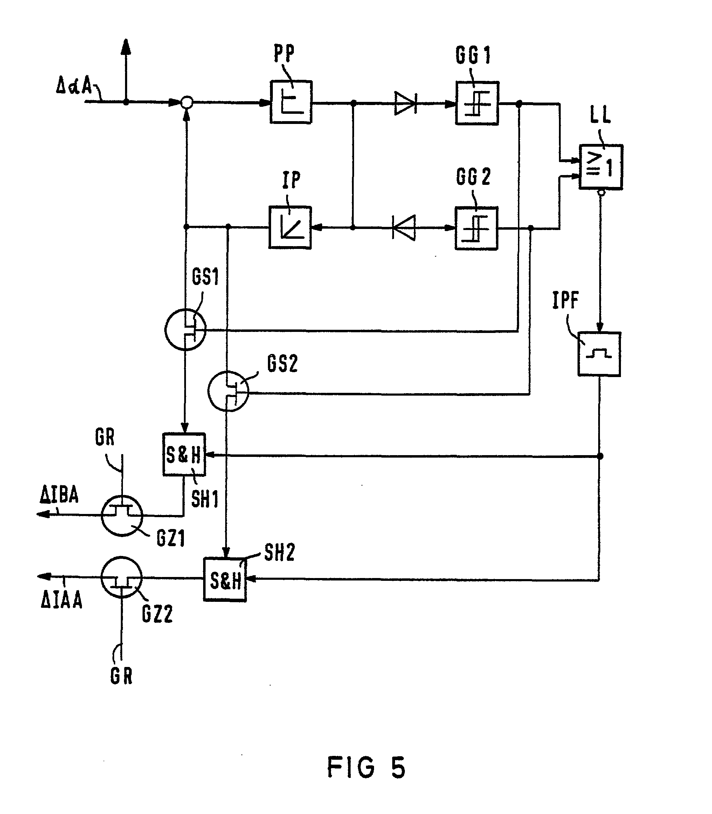

Fig. 5 zeigt den Aufbau der Gradientenerfassung GDA. Ein Proportionalregler PP mit einem Integrator IP in seiner Rückführung stellt an seinem Ausgang den Gradienten zur Verfügung, der einer polaritätsgetrennten Grenzwertmeldeschaltung zugeführt wird. Ein positiver Gradient führt nämlich über eine Diode zum Ansprechen des Grenzwertmelders GG1, dessen Ausgangssignal nun einen Schalter GS1 schließt, der den Wert $\Delta\alpha A$ (genauer: das Ausgangssignal des Integrators IP) über eine Speicher-Halte-Schaltung SH1 ("sample-and-hold") und einen Schalter GZ1, der bei Gleichrichterbetrieb der dem Stromregler RIA zugeordneten Station A durch ein Signal GR = 1 geschlossen ist, das Signal $\Delta IBA$ als Korrekturwert der Vorsteuereinrichtung VB aufschaltet.

Umgekehrt führt ein negativer Gradient zum Ansprechen des Grenzwertmelders GG2 und zum Schließen des Schalters GS2, so daß nunmehr das entsprechende Signal $\Delta IAA$ über eine Speicher-Halte-Schaltung SH2 und einen entsprechenden Schalter GZ2 der Vorsteuereinrichtung VA aufgeschaltet wird.

Führt diese Korrektur dazu, daß der Gleichstrom seinen Sollwert $Id^*$ erreicht und daher der Gradient den Wert Null annimmt, so fallen beide Grenzwertmelder GG1 und GG2 ab und stoßen über ein Logik-Gatter LL eine Impulsstufe IPF an. Der dadurch gebildete Impuls führt dazu, daß entsprechend dem vorher aufgetretenen Vorzeichen des Gradienten die angesteuerte Speicher-Halte-Schaltung nunmehr diesen Wert speichert, um ihn als Korrekturwert der jeweiligen Vorsteuereinrichtung für die Dauer des Netzfehlers bereitzustellen.

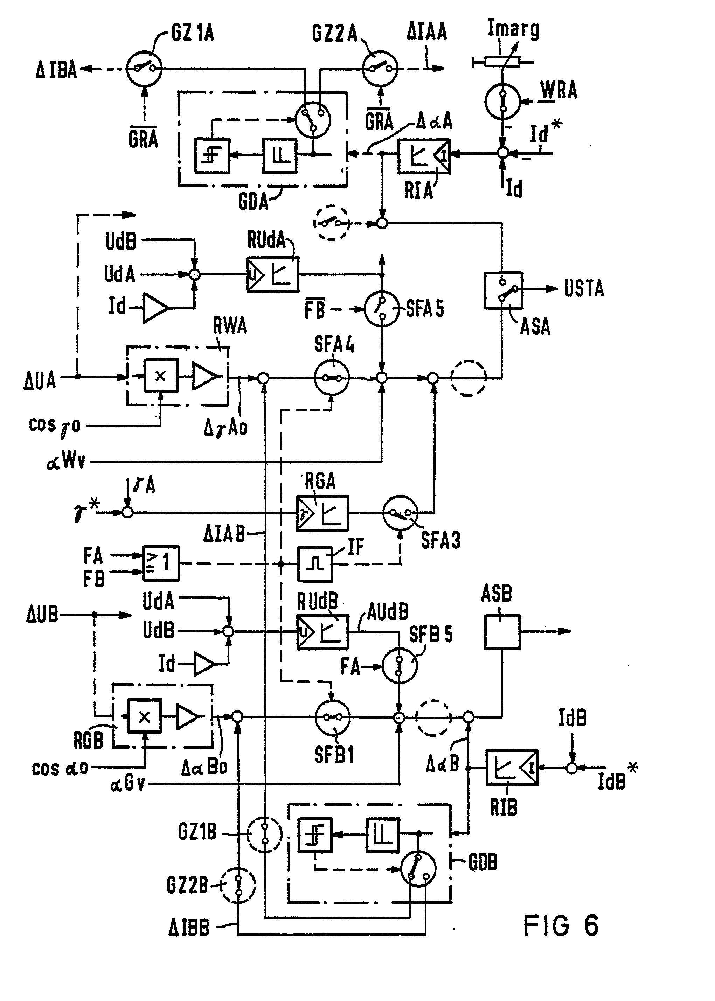

In Fig. 4 sind ferner gestrichelt weitere Wirkungskanäle für $\Delta UA$ und $\Delta UB$ gezeichnet, die nur für Gleichrichterbetrieb der Station B und Wechselrichterbetrieb der Station A vorgesehen sind. Ferner sind gestrichelt weitere Schaltelemente gezeigt, die im bisherigen Betriebszustand geschlossen sind und erst bei einem Betrieb entsprechend Fig. 6 betätigt werden.

Werden nämlich die Station A als Wechselrichterstation und die Station B als Gleichrichterstation betrieben, wie dies in Fig. 2 und Fig. 6 dargestellt ist, so sind für jede Station diejenigen Bauteile vorgesehen und in Eingriff, die in Fig. 4 für die entgegengesetzte Station erläutert wurden.

So bildet z.B. in der Station A ein Rechenglied RWA (Fig. 6) aus $\Delta UA$ und $\gamma O$ eine Wechselrichterlöschwinkel Vorsteuergröße $\Delta\gamma AO$. Das Fehlersignal FA = 1, das einem Spannungseinbruch im Netz NA zugeordnet ist, bezeichnet nunmehr einen Fehler im an die Wechselrichterstation angeschlossenen Netz. Wird der Schalter SFA4 während der Fehlerdauer geschlossen, so wird mit der Wechselrichterlöschwinkel-Vorsteuergröße $\Delta\gamma AO$ die auch im ungestörten Betrieb gebildete Wechselrichtervorsteuergröße $\alpha Wv$ korrigiert, während über einen Schalter SFA3 der Löschwinkelregler RGA blockiert und erst nach Fehlerende zeitverzögert wieder freigegeben wird. Der Schalter SFA5, nur bei einem Fehler im entgegengesetzen Netz B (Fehlersignal FB = 1) geschlossen ist, ist im Fall eines Fehlers in der Station A selbst geöffnet und bringt den Spannungskorrekturregler RUdA außer Angriff.

Der Stromregler RIA erhält bei Wechselrichterbetrieb der Station A (Steuersignal WRA = 1) als Sollwert den entsprechend Fig. 3 gebildeten Stromsollwert $Id^*$, der aber über den geschlossenen Schalter SFA6 um den vorgegebenen Marginalstrom Imarg verringert ist. Die Extremwert-Auswahlschaltung ASA führt die Ablösung des Löschwinkelreglers RGA durch den Stromregler RIA durch, wenn der Gleichstromistwert $Id$ unter den von der Marginalstromregelung vorgegebenen Sollwert $Id^* - Imarg$ absinkt. Solange die Auswahlschaltung ASA den Löschwinkelregler RGA in Eingriff bringt und die Regelstrecke des Stromreglers RIA öffnet, liegt das Stromregler-Ausgangssignal $\Delta\alpha A$ praktisch an seinem Extremalwert und die Gradientenerfassung GDA spricht nicht an. Da dies den Normalfall des Wechselrichterbetriebes entspricht, ist die im Prinzip auch in Fig. 4 für die dort als Wechselrichter betriebene Station B vorgesehene Marginalstromregelung mit einem entsprechenden Stromregler RIB und einer Auswahlschaltung ASB in Fig. 4 nicht gezeigt. Ist jedoch in der Station A der in Fig. 6 gezeigte Stromregler RIA im Eingriff und spricht daher die Gradientenerfassung GDA an, so sind deren Ausgangssignale $\Delta IBA$ und $\Delta IAA$ durch die den Schaltern GZ1, GZ2 (Fig. 5) entsprechenden Schalter GZ1A, GZ2A entsprechend dem Steuersignal GRA = 0 bzw. $\overline{GRA}$ = 1 in der in Fig. 6 gezeigten, geöffneten Stellung blockiert.

Bei dem in Fig. 6 gezeigten Fall einer wechselrichterseitigen Störung und Gleichrichterbetrieb der Station B liefert ein Spannungskorrekturregler RUdB nunmehr das Signal ΔUdB als zweite Vorsteuergröße, die über den mit dem Ansteuersignal FA = 1 geschlossenen Schalter SFB5 zur Korrektur der Gleichrichtervorsteuergröße αGv verwendet wird. Diese Korrekturgröße wird ihrerseits bei geschlossenem Schalter SFB1 mit dem Wert ΔαBO vorgesteuert, der von dem Rechenglied RGB entsprechend dem Produkt aus ΔUB und cos αO gebildet wird.

Auf die bereits im Zusammenhang mit Fig. 5 beschriebene Weise bildet die Gradientenerfassung GDB nunmehr das vom Stromregler RIB abgeleitete Signal ΔIBB, das zur Steuerspannungskorrektur der eigenen Station B verwendet wird, und das entsprechende Signal ΔIAB, das zur Steuerspannungskorrektur der Gegenstation verwendet wird, entsprechend dem jeweiligen Vorzeichen des erfaßten Gradienten. Die am Ausgang dieser Signale liegenden Schalter GZ1B, GZ2B sind beim betrachteten Gleichrichterbetrieb der Station B geschlossen.

Ist für jeden Stromrichter seine Rolle als Gleichrichter oder Wechselrichter anlagenmäßig bestimmt, so sind zur Durchführung des erfindungsgemäßen Verfahrens jeweils höchstens die in den Fig. 4 und 6 benötigten Steuerelemente nötig. Bei der bevorzugten Ausführungsform der Erfindung kann jedoch durch ein Zustandssignal "mode" zwischen einem Modus mit Gleichrichterbetrieb in Station A und Wechselrichterbetrieb in Station B (Fig. 1 und 4) und einem Modus mit Gleichrichterbetrieb in Station B und Wechselrichterbetrieb in Station A (Fig. 2 und 6) umgeschaltet werden. Hierzu ist es lediglich erforderlich, die in Fig. 4 gezeigten Bauteile um in Fig. 6 gezeigte Bauteile zu ergänzen, um auf diese Weise in jeder Station eine dem Wechselrichterbetrieb und eine dem Gleichrichterbetrieb zugeordnete Steuerkette zu erhalten. Geeignete Schalter bringen jeweils nur die dem betreffenden Betriebsmodus entsprechende Steuerkette in Eingriff. Eine derartige Vorrichtung ist in Fig. 7 gezeigt.

Die Schalter sind dann jeweils beim Zustand "1" des angegebenen Steuersignals geschlossen, wobei "mode" = 1 den Gleichrichterbetrieb der Station A mit den Steuersignalen GRA = 1, WRA = 0 und den inversen Signalen $\overline{GRA}$ = 0, $\overline{WRA}$ = 1 und den Wechselrichterbetrieb der Station B mit WRB = 1, GRB = 0 bzw. $\overline{WRB}$ = 0; $\overline{GRB}$ = 1 steuert. Der andere Betriebszustand "mode" = 0 bezeichnet Gleichrichterbetrieb in Station B und Wechselrichterbetrieb in Station A, d.h. GRA = $\overline{WRA}$ = $\overline{GRB}$ = WRB = 0.

In einer einzelnen Station ist dabei der jeweilige Stromregler bei beiden Betriebsarten eingeschaltet, wobei er bei Wechselrichterbetrieb (Schalter SAW bzw. SBW geschlossen) als Marginalstromregler betrieben ist und unter Abschaltung der Gleichrichter-Vorsteuergröße (Schalter SAG2 bzw. SGB2 geöffnet) dem einen Eingang einer Auswahlschaltung (ASA bzw. ASB) aufgeschaltet ist, dessen anderer Eingang an die mit der Löschwinkelregler-Ausgangsgröße (ΔγA bzw. ΔγB) beaufschlagte Wechselrichter-Steuerkette angeschlossen ist (Schalter SAW2 bzw. SBW 2 geschlossen).

Bei Umschalten in Gleichrichterbetrieb dieser Station wird durch Öffnen des Schalters SAW2 bzw. SBW2 die ganze Wechselrichter-Steuerkette am Eingang der Auswahlschaltung abgeschaltet und der - durch Öffnen des Schalters SAW1 bzw. SBW1 nicht mehr im Marginalstrombetrieb arbeitende - Stromregler, die Gleichrichtervorsteuergröße (Schalter SAG2 bzw. SBG2 geschlossen) und im Fehlerfall (Schalter SFA1 bzw. SFB1 geschlossen) auch der Gleichrichterzündwinkel-Steuerwert (ΔαAo bzw. ΔγAo) ist auf die Steuerspannung durchgeschaltet.

Beiden Steuerketten einer einzelnen Station ist ein Spannungskorrekturregler (RUdA bzw. RUdB) gemeinsam, der über die Schalter SFA2 und SFA5 (Station A) bzw. SFB2 und SFB5 jeweils nur in die gerade eingeschaltete Wechselrichter- oder Gleichrichtersteuerkette der Steuerspannung eingreifen kann. Das dem entsprechenden Betrieb zugeordnete Zustandssignal steuert über eine UND-Verknüpfung mit dem den Fehler der Gegenstation anzeigenden Fehlersignal diese Schalter so, daß der Spannungskorrekturregler die Steuerspannung dieser Station nur bei einem Fehler der Gegenstation korrigiert.

Demgemäß zeigen die Schalterstellungen der Figur 7 Gleichrichterbetrieb der Station A, Wechselrichterbetrieb der Station B, einen gleichrichterseitigen Netzfehler und eine außer Eingriff stehende Marginalstromregelung in der Wechselrichterstation (B) an.

In Figur 1 und Figur 2 ist im Schaltungsblock der Steuersätze STA, STB angedeutet, daß vorteilhaft die auf getrennte Phasen des jeweiligen Stromrichters arbeitenden Ventile von Einzelsteuersätzen gezündet werden. Dies ermöglicht im unsymmetrischen Störungsfall die Zündimpulse auf die unsymmetrischen Phasenspannungen zu synchronisieren. Es kann auch erforderlich werden, für die Steuerung der auf jeweils eine Phase des gestörten Wechselspannungsnetzes arbeitenden Ventile jeweils eine eigene Steuerspannung zu bilden. Für die Bildung der Vorsteuergrößen und der Steuerspannungen werden in jeder Station insbesondere Mikrocomputer eingesetzt.

Ingesamt wird durch die Erfindung erreicht, daß in der HGÜ trotz des fehlerbedingten Einbruchs der Gleichspannung ein hoher Gleichstrom aufrechterhalten wird, so daß insgesamt die fehlerbedingte Reduzierung der übertragenen elektrischen Leistung begrenzt werden kann.

## Patentansprüche

1. Verfahren zum Betrieb einer HGÜ-Kurzkupplung bei einem Netzfehler in einem der beiden über je einen Stromrichter an die Gleichstromstrecke angeschlossenen Wechselspannungspetze,
**dadurch gekennzeichnet,**
- daß an den Phasen des durch den Netzfehler gestörten Netzes die fehlerbedingte Änderung (ΔUA) der Spannungsamplitude erfaßt und zu einer ersten Vorsteuergröße (ΔαAO) umgesetzt wird,

- daß die erste Vorsteuergröße der Steuerspannung (αGv + ΔαA) des an das fehlerhafte Netz angeschlossenen, im folgenden als "gestörten Stromrichter" bezeichneten Stromrichters im Sinne einer Verringerung einer HGÜ-Gleichspannung aufgeschaltet wird, und

- daß durch Ausregeln der Spannungsdifferenz (UdB - UdA) an den Gleichspannungsanschlüssen der Stromrichter eine zweite Vorsteuergröße für die Steuerspannung des anderen - "ungestörten" - Stromrichters gewonnen wird (Fig. 4).

2. Verfahren nach Anspruch 1, **dadurch gekennzeichnet**, daß an jeder Phase (RST) des gestörten Netzes die Abweichung der Spannungsamplitude (UA$_{RST}$)von einem vorgegebenen Nennwert (1 + ΔÜA) erfaßt wird, daß die maximale Abweichung ausgewählt wird und daß die erste Vorsteuergröße (ΔαAO = ΔUA. cos αO) unter Berücksichtigung des Übersetzungsverhältnisses bei Überschreitung eines vorgegebenen Grenzwertes proportional zur maximalen Abweichung bestimmt wird.

3. Verfahren nach Anspruch 1 oder 2, **dadurch gekennzeichnet**, daß zum Ausregeln der Spannungsdifferenz als Sollwert die Anschlußgleichspannung des gestörten Stromrichters, vermindert um einen gleichstromporportionalen Spannungsfall, und als Istwert die Anschlußgleichspannung des ungestörten Stromrichters vorgegeben wird.

4. Verfahren nach einem der Ansprüche 1 bis 3, **dadurch gekennzeichnet**, daß die erste Vorsteuergröße (ΔαAO, Fig.4; ΔγAO, Fig. 6) durch Multiplikation der Spannungsänderung ( UA) mit dem Kosinus eines vorgegebenen Gleichrichter-Steuerwinkels (αO) bei Gleichrichterbetrieb bzw. eines vorgegebenen Wechselrichter-Steuerwinkels (γO) bei Wechselrichterbetrieb gebildet wird (Fig.4, Fig.6).

5. Verfahren nach einem der Ansprüche 1 bis 4, **dadurch gekennzeichnet**, daß als Spannungsamplitude der Spannungs-Effektivwert erfaßt wird.

6. Verfahren nach einem der Ansprüche 1 bis 5, **dadurch gekennzeichnet**, daß bei Absinken der HGÜ-Gleichspannung auf einen vorgegebenen Grenzwert (0,5) die Gleichspannung durch Verringerung des HGÜ-Stromes (Id*) auf dem Grenzwert gehalten wird (Fig.3).

7. Verfahren nach einem der Ansprüche 1 bis 6, **dadurch gekennzeichnet**, daß der HGÜ-Gleichstrom durch einen auf den als Gleichrichter betriebenen Stromrichter arbeitenden Stromregler geregelt wird, daß beim Auftreten eines Neztfehlers ein aus der Regelabweichung des Stromes abgeleitets Signal gebildet und bei unter dem Strömsollwert liegenden Werten des HGÜ-Gleichstroms der Steuerspannung des als Wechselrichter betriebenen Stromrichters und bei über dem Sollwert liegendem Istwert der Steuerspannung des als Gleichrichter betriebenen Stromrichters korrigierend aufgeschaltet wird.

8. Verfahren nach Anspruch 7, **dadurch gekennzeichnet**, daß am Ausgang des Stromreglers (RIA) eine erste Korrekturgröße (ΔαA) für die Steuerspannung des Gleichrichters, sowie aus der zeitlichen Ableitung des Stromreglerausgangssignals das Vorzeichen der Strom-Soll/Istwert-Differenz sowie eine aus dem Trägerausgangssignal gebildete zweite Korrekturgröße (ΔIAA; ΔIBA) bestimmt wird, und daß die zweite Korrekturgröße entsprechend dem gebildeten Vorzeichen der Steuerspannung des Gleichrichters oder des Wechselrichters aufgeschaltet wird.

9. Verfahren nach einem der Ansprüche 1 bis 7, **dadurch gekennzeichnet**, daß der Sollwert (Id**) des HGÜ-Stroms im ungestörten Zustand von einem Leistungsregler (RP) gebildet wird, der für die Fehlerdauer blockiert und erst nach Fehlerende freigegeben wird (Fig. 3).

10. Verfahren nach Anspruch 8, **dadurch gekennzeichnet**, daß während der Fehlerdauer der Leistungsregler durch Begrenzung des Sollwerts (Id*) auf einen der Stromtragfähigkeit der Stromrichterventile entsprechenden Sollwert (IdO) blockiert wird.

11. Verfahren nach einem der Ansprüche 1 bis 9, **dadurch gekennzeichnet**, daß die Steuerspannung des Wechselrichters im ungestörten Zustand von einem Löschwinkelregler bestimmt wird, der während der Fehlerdauer blockiert und erst nach Fehlerende zeitverzögert freigegeben wird.

12. Verfahren nach einem der Ansprüche 1 bis 10, **dadurch gekennzeichnet**, daß die Zündimpulse für die auf einzelne Phasen des gestörten Netzes arbeitenden Ventile mittels Einzelsteuersätze getrennt gebildet werden.

13. Verfahren nach Anspruch 1 bis 11, **dadurch gekennzeichnet**, daß für jeden Stromrichter je ein Mikrocomputer die Vorsteuergrößen und die entsprechende Steuerspannung oder jeweils eine entsprechende Steuerspannung für die auf eine Phase des Stromrichters arbeitenden Ventile bildet.

**Revendications**

1. Procédé pour faire fonctionner un couplage serré dans une installation de transmission à courant continu à haute tension dans le cas d'un défaut dans l'un des deux réseaux à tension alternative raccordés respectivement par l'intermédiaire d'un convertisseur statique à la voie à courant continu, caractérisé par le fait
— que la modification (ΔUA), conditionnée par le défaut, de l'amplitude de la tension est détectée au niveau des phases du réseau perturbé par le défaut et est convertie en une première grandeur de commande pilote (ΔαAO),
— que la première grandeur de commande pilote est appliquée à la tension de commande (αGv+ΔαA) du convertisseur statique raccordé au réseau défectueux et désigné ci-après sous le terme de "convertisseur statique perturbé", dans le sens d'une réduction de la tension continue de l'installation de transmission à courant continu à haute tension, et

– qu'une seconde grandeur de commande pilote pour la tension de commande de l'autre convertisseur statique – "non perturbé" – est obtenue par élimination, par réglage, de la différence de tension (UdB–UdA) présente au niveau des bornes à tension continue des redresseurs statiques (figure 4).

2. Procédé suivant la revendication 1, caractérisé par le fait que l'écart entre l'amplitude (UA$_{RST}$) de la tension et une valeur nominale prédéterminée (1+ üA) est détecté dans chaque phase (RST) du réseau perturbé, que l'écart maximum est sélectionné et que la première grandeur de commande pilote (Δα$AO$ = UA.cosα$O$) est déterminée en tenant compte du rapport de transformation, lors du dépassement d'une valeur limite prédéterminée, proportionnellement à l'écart maximum.

3. Procédé suivant la revendication 1 ou 2, caractérisé par le fait que pour l'élimination, par réglage, de la différence de tension, la tension continue aux bornes du convertisseur statique perturbé, diminuée d'une chute de tension proportionnelle au courant continu, est prédéterminée en tant que valeur de consigne et que la tension continue aux bornes du convertisseur statique non perturbé est prédéterminée en tant que valeur instantanée.

4. Procédé selon l'une des revendications 1 à 3, caractérisé en ce que la première grandeur de commande pilote (Δα$AO$, figure 4; Δγ$AO$, figure 6) est formée par multiplication de la variation de tension (ΔUA) par le cosinus d'un angle de commande prédéterminé (α0) du redresseur, dans le cas du fonctionnement en redresseur, ou par le cosinus d'un angle de commande prédéterminé (γ0) de l'onduleur, dans le cas du fonctionnement en onduleur (figure 4, figure 6).

5. Procédé suivant l'une des revendications 1 à 4, caractérisé par le fait que la valeur efficace de la tension est détectée en tant qu'amplitude de la tension.

6. Procédé suivant l'une des revendications 1 à 5, caractérisé par le fait que dans le cas où la tension continue utilisée dans la transmission à courant continu à haute tension, à une valeur limite prédéterminée (0,5), la tension continue est maintenue à la valeur limite par réduction du courant (Id*) de l'installation de transmission à courant continu à haute tension (figure 3).

7. Procédé suivant l'une des revendications 1 à 6, caractérisé par le fait que le courant continu de l'installation de transmission à courant continu à haute tension est réglé au moyen d'un régulateur de courant agissant sur le convertisseur statique fonctionnant en tant que redresseur, que, lors de l'apparition d'un défaut dans le réseau, un signal tiré de l'écart de réglage du courant est formé et que ce signal est appliqué, de façon corrective, à la tension de commande du convertisseur de courant fonctionnant en tant qu'onduleur, dans le cas où des valeurs du courant continu de l'installation de transmission à courant continu à haute tension sont inférieures à la valeur de consigne du courant, et est appliqué, de façon corrective, à la tension de commande du convertisseur de courant fonctionnant en tant que redresseur, dans le cas où la valeur instantanée est supérieure à la valeur de consigne.

8. Procédé suivant la revendication 7, caractérisé par le fait qu'une première grandeur de correction (ΔαA) pour la tension de commande du redresseur est déterminée à la sortie du régulateur de courant (RIA), et que le signe de la différence valeur de consigne/valeur instantanée du courant ainsi qu'une seconde grandeur de correction (ΔIAA;ΔIBA) formée à partir du signal de sortie de la porteuse sont déterminés à partir de la dérivée dans le temps du signal de sortie du régulateur de courant, et que la seconde grandeur de correction est appliquée, conformément au signe formé, à la tension de commande du redresseur ou de l'onduleur.

9. Procédé suivant l'une des revendications 1 à 7, caractérisé par le fait que la valeur de consigne (Id**) du courant de l'installation de transmission à courant continu à haute tension dans l'état non perturbé est formée par un régulateur de puissance (RP), qui est bloqué pendant la durée du défaut et est libéré uniquement après la fin du défaut (figure 3).

10. Procédé suivant la revendication 8, caractérisé par le fait que pendant la durée du défaut, le régulateur de puissance est bloqué par suite de la limitation de la valeur de consigne (Id*) à une valeur de consigne (IdO) correspondant à la capacité de transfert de courant des valves du convertisseur statique.

11. Procédé suivant l'une des revendications 1 à 9, caractérisé par le fait que la tension de commande de l'onduleur à l'état non perturbé est déterminée par un régulateur de l'angle d'extinction, qui est bloqué pendant la durée du défaut et est libéré, d'une manière retardée uniquement après la fin du défaut.

12. Procédé suivant l'une des revendications 1 à 10, caractérisé par le fait que les impulsions d'amorçage pour les valves opérant dans les différentes phases du réseau perturbé sont formées séparément à l'aide d'unités de commande individuelles.

13. Procédé suivant l'une des revendications 1 à 11, caractérisé par le fait que pour chaque convertisseur statique, un micro-ordinateur respectif forme les grandeurs de commande pilote et la tension de commande correspondante ou bien respectivement une tension de commande correspondante pour les valves opérant dans une phase du convertisseur statique.

**Claims**

1. Process for the operation of an HVDC coupling system with a network fault in one of the two alternating voltage networks which are connected to the direct current channel each by means of a power converter, characterized in that
   – at the phases of the network which is disturbed by the network fault, the accidental change (ΔUA) of the voltage amplitude is detected and converted to a first precontrol quantity (Δα$AO$),
   – the first precontrol quantity of the control volt-

age (αGv + ΔαA) of the power converter, connected to the faulty network , described in the following as "disturbed power converter" in the sense of a reduction of an HVDC direct voltage is connected to the supply, and

– by adjusting the voltage difference (UdB–UdA) to the direct voltage connections of the power converter, a second precontrol quantity for the control voltage of the other – "undisturbed" – power converter is gained (Figure 4).

2. Process according to claim 1, characterized in that at each phase (RST) of the disturbed network, the deviation of the voltage amplitude (UA$_{RST}$) from a predetermined nominal value (1 + Δ üA) is detected, in that the maximum deviation is selected and in that the first precontrol quantity (ΔαAO = ΔUA. cos αO), taking the transmission ratio into consideration when a predetermined limiting value is exceeded, is determined proportional to the maximum deviation.

3. Process according to claim 1 or 2, characterized in that in order to adjust the voltage difference, the connection direct voltage of the disturbed power converter, reduced by a direct-current-proportional voltage drop, is specified as desired value, and the connection direct voltage of the undisturbed power converter is specified as actual value.

4. Process according to one of claims 1 to 3, characterized in that the first precontrol quantity (ΔαAO, Figure 4; ΔγAO, Figure 6) is formed by multiplication of the voltage change (UA) with the cosine of a predetermined rectifier control angle (α0) with rectifier operation or of a predetermined inverter control angle (γ0) with inverter operation (Figure 4, Figure 6).

5. Process according to one of claims 1 to 4, characterized in that the voltage effective value is detected as voltage amplitude.

6. Process according to one of claims 1 to 5, characterized in that with the dropping of the HVDC direct voltage to a predetermined limiting value (0.5), the direct voltage is held at the limiting value by means of the reduction of the HVDC current (Id*) (Figure 3).

7. Process according to one of claims 1 to 6, characterized in that the HVDC direct current is controlled by a working current control on the power converter, operated as rectifier, in that with the occurrence of a network fault a signal is formed, discharged from the control deviation of the current, and the supply is connected in a correcting manner with values, lying beneath the current desired value, of the HVDC direct current of the control voltage of the power converter operated as inverter, and with the actual value, lying above the desired value, of the control voltage of the power converter operated as rectifier.

8. Process according to claim 7, characterized in that at the output of the current regulator (RIA), a first corrector quantity (ΔαA) for the control voltage of the rectifier is determined, and from the time derivative of the current regulator output signal, the sign of the current desired/actual value difference is determined, and a second corrector quantity (ΔIAA; ΔIBA), formed from the carrier output signal, is determined, and in that the second corrector quantity is connected to the supply, corresponding to the formed sign of the control voltage of the rectifier or of the inverter.

9. Process according to one of claims 1 to 7, characterized in that the desired value (Id**) of the HVDC current in the undisturbed state is formed by a power control (RP) which is blocked for the duration of the fault and is only unblocked after the fault has ended (Figure 3).

10. Process according to claim 8, characterized in that while the fault is occurring, the power control is blocked by means of limiting the desired value (Id*) to a desired value (IdO) corresponding to the current carrying ability of the power converter valve.

11. Process according to one of claims 1 to 9, characterized in that the control voltage of the inverter in the undisturbed state is determined by an extinction-angle control which is blocked for the duration of the fault and is only unblocked in a time-delayed manner after the fault has ended.

12. Process according to one of claims 1 to 10, characterized in that the trigger pulses for the valves, working on individual phases of the disturbed network, are formed separately by means of individual trigger equipment.

13. Process according to claim 1 to 11, characterized in that for each power converter a microcomputer forms the precontrol quantities and the corresponding control voltage or in each case a corresponding control voltage for the valves working on a phase of the power converter.

FIG 1

EP 0 197 352 B1

FIG 2

FIG 3

EP 0 197 352 B1

FIG 4

EP 0 197 352 B1

FIG 5

FIG 6

EP 0 197 352 B1

FIG 7